# EUROPEAN PATENT SPECIFICATION

(11) **EP 2 343 814 B1**
(45) Date of publication and mention of the grant of the patent: **02.10.2013**
(21) Application number: 10000165.0
(22) Date of filing: 11.01.2010
(51) Int. Cl.: H04B 1/16, H04B 15/00, H04W 52/02

(54) **Radio frequency receiver and method for dynamically adjusting a received signal strenght indication module**
Funkfrequenzempfänger und Verfahren zur dynamischen Anpassung eines Empfangssignalstärkenanzeigemoduls
Récepteur de fréquence radio et procédé pour le réglage dynamique d'un module d'indication de la force d'un signal reçu

(43) Date of publication of application: 13.07.2011
(73) Proprietor: ELSTER, 77185 Lognes (FR)
(72) Inventor: Dupont, Vincent, 30260 Gailhan (FR); Colin, Bruno, 34400 Saint Series (FR)
(74) Representative: Novagraaf Technologies

(56) References cited:
- EP-A2- 0 696 877
- US-A1- 2001 022 790
- US-A1- 2005 287 974

## Description

### TECHNICAL FIELD OF THE INVENTION

The invention relates generally to wireless communications and more particularly to low consumption radio frequency communication systems comprising a received signal strength information module.

### BACKGROUND OF THE INVENTION

Radio frequency (RF) communication systems are commonly used as wireless communication devices. For direct communications, also known as point-to-point communications, the wireless communications devices tune their receivers and transmitters to the same channel or channels and communicate over that channel. For indirect wireless communications, each wireless communication device communicates directly with an associated base station and/or an associated access point via an assigned channel. The associated base station and/or associated access points may communicate with each other directly via a wide area network.

Each wireless which participates to the wireless communications includes an RF transceiver - an RF receiver and an RF transmitter - or is coupled with an associated RF transceiver. The RF receiver is coupled to an antenna and comprises a receiving unit and a control and processing unit. The receiving unit receives RF signals which may include data. These data are transmitted to the control and processing unit, which may be for instance a microcontroller, in order to be read and processed.

In order to minimize energy consumption, the control and processing unit is only waken up having detected an input RF signal having a sufficient input power level. This enables to make the control and processing unit be in stand by when there is no RF signal to be detected. For that purpose, the RF receiver includes a received signal strength indication (RSSI) module that measures the power level of the received RF signal. This RSSI module contains an RSSI threshold that is compared to the power level of the received RF signal. The control and processing unit is only waken up and the receiving unit is only put in full data reception mode having found that said power level is greater than or equal to said threshold.

Unfortunately, the use of RSSI module may lead to consumption failures. Indeed, the comparison between said RSSI threshold and said received RF signal may be influenced by noisy environmental conditions. For instance, in a room containing computers and measurement apparels, electromagnetic radiations covers a large spectral band, typically between 300 MHz and 1 GHz. Parasite signals that has the same frequency than the RF receiver and that does not contain any data may also be detected in such a way that its high power level is higher than said RSSI threshold.

These consumption failures can be overcome by adjusting said RSSI threshold according to noisy environmental conditions.

A method for adjusting a RSSI module is known from US 2005/0287974. This method uses two signals having different known power levels. The power level of the first signal is measured and then compared with its known power level. Offset of the RSSI module is then adjusted so as to have the known power level favorably comparing with the measured power level. The power level of the second signal - less than the one of the first signal - is measured and then compared with its known power level. Gain of the RSSI module is then adjusted so as to have the known power level favorably comparing with the measured power level. Such a method enables to adapt automatically the RSSI level.

Nevertheless, on one hand, the environmental noise level is not taken into account, because what is adjusted is the RSSI level - in order to have a measurement that is independent on noise level - and not the RSSI threshold - in order to prevent from unexpected wake up requests. Therefore, in noisy conditions, the RSSI threshold may not be sufficient to prevent the receiver from too many unexpected wake up requests of the control and processing unit, which leads to high and useless consumptions. On the other hand, the RF receiver needs an external component that is able to transmit the two said RF signals having different known power levels. Coupling such an external component with the RF receiver may introduce other conception and configuration problems.

There is therefore a need for an RF receiver and a method that allows to adjust dynamically the RSSI module according to noisy conditions, without needing a new external component to be integrated.

### SUMMARY OF THE INVENTION

The dynamic adjustment of a received signal strength indication module of the present invention, according to the number of unexpected wake up requests of the control and processing unit, meets these needs and others. This solution has been found by searching a way to eliminate noise parasites that make the RF receiver be awakened with a no coherent signal. Thus, it appeared that the received signal strength indication module may be dynamically controlled by adjusting the threshold that allows the RF receiver to be awakened, using preset low and high limits corresponding to the number of times the RF receiver has been awakened with a no coherent signal during a preset adjusting period.

For this purpose, the present invention addresses these problems by providing a method for dynamically adjusting a received signal strength information (RSSI) module in a radio frequency (RF) receiver comprising a receiving unit and a control and processing unit, said method comprising, during a preset adjusting period, the steps of:
- periodically receiving an input signal having an input power level and measuring said input power level, according to a triggering period,
- only waking up said control and processing unit for receiving said input signal having found that said input power level is greater than or equal to an adjustable RSSI threshold,
- detecting the number of false waking up which correspond to the times the receiver has been awakened with a no coherent signal,
- at the end of said adjusting period, adjusting said RSSI threshold in such way that said RSSI threshold is increased if higher than a preset high limit, and is decreased if lower than a preset low limit.

This method is based on counting the number of times the receiver has been awakened with a no coherent signal, which corresponds to the number of unexpected wake up requests. A no coherent signal means a received signal which does not contain any data transmitted in the expected format. The RSSI threshold is adjusted in order to obtain a number of false waking up that is comprised between the preset low and high limits.

This method allows therefore to make the accuracy of an RF receiver including a RSSI module, and also the energy consumption of this RF receiver, be less influenced by external phenomenon such as other RF transmitters, without needing an external component to be integrated.

Moreover, it is to be noted that this method confers to the RF receiver an easiness to modify and adjust the RF receiver according to different experiences or studies.

According to a preferred embodiment of the invention, at the end of the adjusting period, the RSSI threshold may be increased by a preset high offset or decreased by a preset low offset. This will allow the RSSI threshold to be easily adjusted by a simple offset.

For the purpose of adapting quickly to high noise levels and coming back slowly to low noise levels, the absolute value of said high offset may be greater than the absolute value of said low offset. The RF receiver will be able to be adapted quickly to new environmental conditions. Moreover, in the case of periodical noise appearances, the RF receiver will be more efficient, because the RSSI threshold will not have to be entirely decreased before a new request of increasing.

For the purpose of limiting the full data reception mode of the receiving unit and the control and processing unit, the input signal may be entirely received only having found that said input signal is a coherent signal.

For the purpose of making the detection of a false wake up quicker and more efficient, a no coherent signal may be detected only having found that preliminary binary input signal does not match with an expected specific preliminary wake up signal.

For the purpose of minimizing the receiving unit work, the receiving unit may be in stand by having received and measured the input signal.

For the purpose of minimizing the energy consumption due to the control and processing unit work, when the input power level is greater than or equal to the RSSI threshold, the control and processing unit may be in stand by having found that the input signal is a no coherent signal.

For the purpose of minimizing the energy consumption due to the control and processing unit work, when the input power level is greater than or equal to the RSSI threshold, the control and processing unit may be in stand by having found that said input signal is a coherent signal and entirely received the input signal.

For the purpose of making the dynamic adjustment of the RSSI threshold be done after a sufficient number of measurements, the adjusting period may be a multiple of the triggering period.

According to a preferred embodiment of the invention, the method may be cyclically repeated according to the adjusting period. This will allow the RF receiver to be adapted to noise conditions each adjusting period.

According to a further aspect of the invention, there is provided an RF receiver for dynamically adjusting a received signal strength information (RSSI) module, said RF receiver comprising a receiving unit and a control and processing unit, said receiving unit comprising:
- a RSSI module comprising the value of an adjustable RSSI threshold,
- an RF detector, said detector periodically receiving an input signal having an input power level and measuring said input power level, according to a triggering period,
- an input signal/RSSI threshold comparator, said comparator comparing said input power level with said RSSI threshold,
- a control and processing unit wake up module, said module only waking up said control and processing unit for receiving said input signal having found that said input power level is greater than or equal to said RSSI threshold, said control and processing unit detecting, in a preset adjusting period, the number of false waking up which correspond to the times the receiver has been awakened with a no coherent signal and adjusting said RSSI threshold in such way that said RSSI threshold is increased if higher than a preset high limit, and is decreased if lower than a preset low limit.

For the purpose of allowing to adapt manually the receiver to noise conditions that may appear, the RF receiver may comprise a parameters manually adjusting module for manually adjusting said RSSI threshold, high and low limits.

For the purpose of allowing to separate the RRSI threshold adjustment from the rest of the RF receiver, the RF receiver may comprise a dynamically RSSI threshold adjusting enable/disable module.

According to a particular embodiment of the invention, the control and processing unit may comprise at least one among a microprocessor and a microcontroller.

### BRIEF DESCRIPTION OF THE DRAWINGS

A detailed description of examples of implementation of the present invention is provided herein below with reference to the following drawings in which:
- figure 1 is a schematic illustration of a RF receiver for dynamically adjusting a RSSI module according to the present invention, and
- figures 2 to 4 are schematic illustrations of a method for dynamically adjusting an RSSI module in a RF receiver according to the present invention.

### DETAILED DESCRIPTION

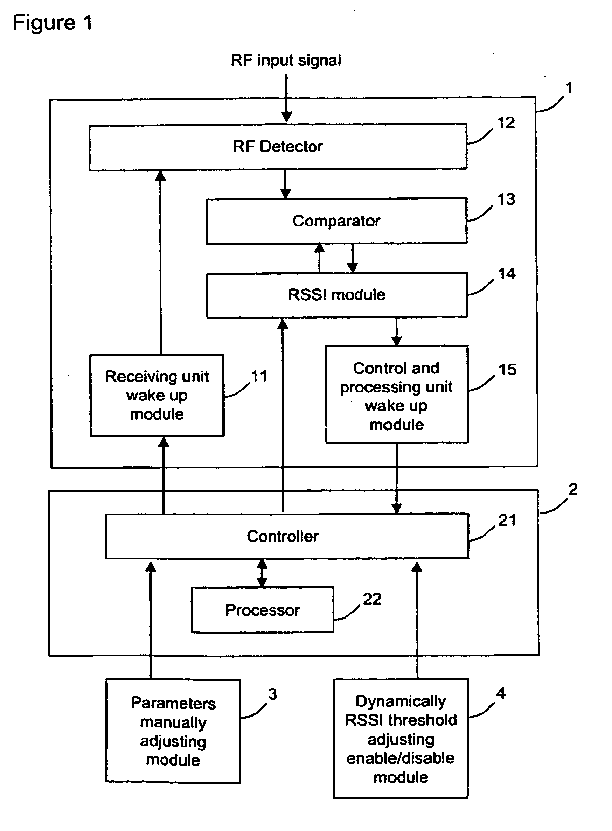

Figure 1 illustrates a schematic illustration of a RF receiver for dynamically adjusting a RSSI module according to the present invention.

The RF receiver comprises a receiving unit 1 and a control and processing unit 2. It is able to receive an RF input signal having an input power level and an input frequency within the range of about 3 Hz to 300 GHz, for example 433 MHz.

The receiving unit 1 comprises a receiving unit wake up module 11, an RF detector 12, a comparator 13, an RSSI module 14 and a control and processing unit wake up module 15. The RF input signal is received by the RF detector 12 that may include an antenna. The detector 12 is also able to measure the power level of a signal.

The RSSI module 14 contains the following parameters:
- the RSSI threshold offset, which corresponds to the offset added to the RSSI threshold in order to adapt the RSSI module to noise conditions,
- the wake up counter, which automatically comes back to zero after each RSSI threshold adjustment,
- the false wake up counter, which counts the number of false wake up requests during an adjusting period and which automatically comes back to zero after each RSSI threshold adjustment,
- the adjusting period, which determines the durations between two adjustments of the RSSI threshold and which is given as a multiple of the triggering period,
- the low limit, which gives the number of false wake up requests that is tolerated before decreasing the RSSI threshold,
- the low limit, which gives the number of false wake up requests that is tolerated before increasing the RSSI threshold, and
- a configuration parameter, which determines whether the dynamic adjustment is activated or not.

The control and processing unit 2 comprises a controller 21 and a processor 22 which are linked to each other. The controller 21 manage all the information and requests of the receiving unit 2. The processor 22 is dedicated to data processing and calculations.

Module 11 is linked to the controller 21 in order to trigger periodically the wake up of the receiving module and to make the detector 12 be ready for a measurement. The comparator makes the comparison between the input power level of the received input signal and the value of the RSSI threshold from the RSSI module 14. Module 14 also contains the value of the low limit and the high limit of the number of false wake up that will be described hereafter.

Module 15 is linked to RSSI module 14 to provide to said module 15 the information of comparison from the comparator 13. If the input power level is greater than or equal to the RSSI threshold, module 15 will communicate with the controller 21 in order to wake up the control and processing unit 2.

The RF receiver also contains a parameters manually adjusting module 3 that allows the user of the RF receiver to modify directly and manually the adjustable parameters of the RSSI module 14. This module 3 may be composed of command buttons that allows to increase or decreased said parameters. These adjustable parameters are the RSSI threshold and the low and high limits. All these manually adjustable parameters allow to adapt easily the RF receiver to new noise conditions that may appear when the RF receiver is put in a new environment.

The RF receiver also contains a dynamically RSSI threshold adjusting enable/disable module 4 that allows to control manually the time when the dynamic adjustment of the RSSI threshold is running. This module 4 may be a command button that the user is able to press when the dynamic adjustment of the RSSI threshold is required.

In the present embodiment of the invention, the controller 21 is a microcontroller and the processor 22 is a microprocessor.

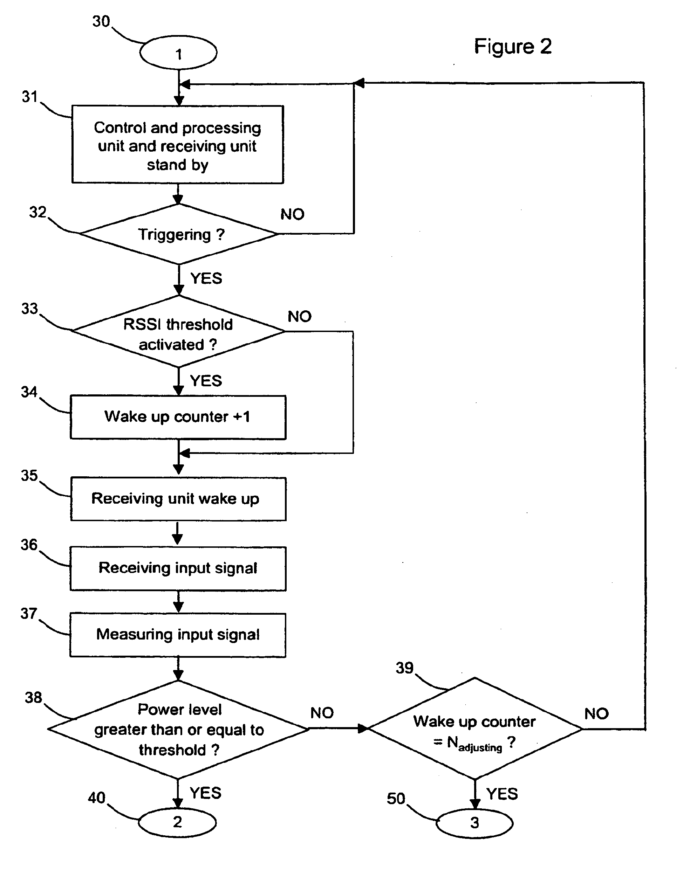

Figures 2 to 4 illustrate schematic illustrations of a method for dynamically adjusting an RSSI module in a RF receiver according to the present invention.

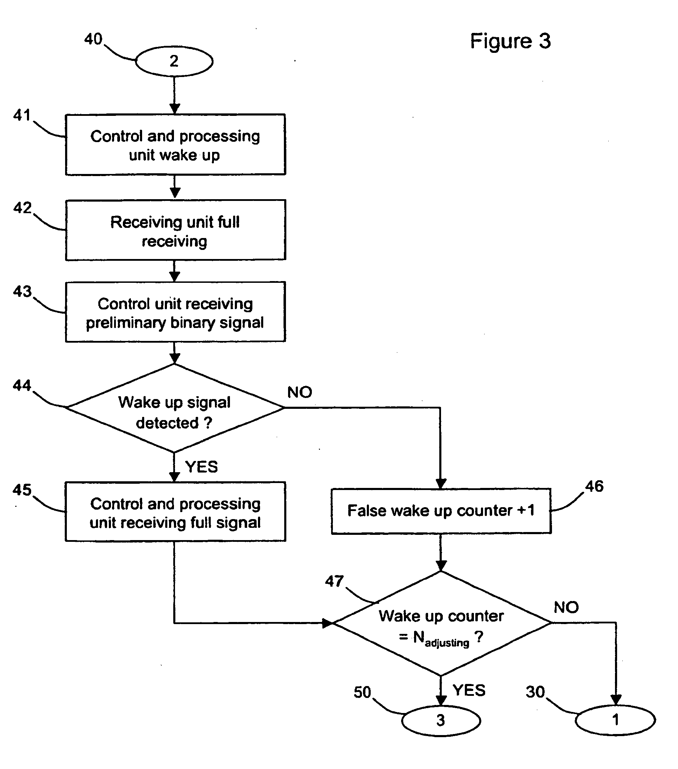

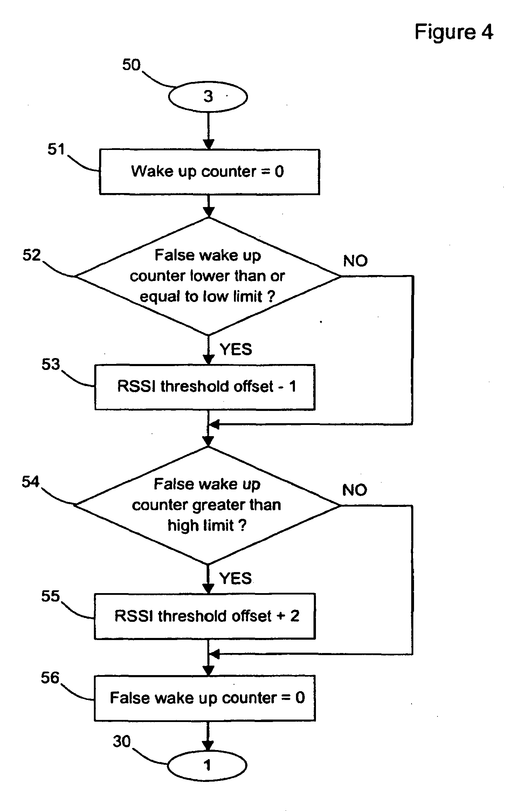

This method is divided into three parts. The first part 30, illustrated by figure 2, illustrates the measurement and the comparison with the RSSI threshold. The second part 40, illustrated by figure 3, illustrates the reception and the determination of the coherence of the received signal. The third part 50, illustrated by figure 4, illustrates the adjustment of the RSSI threshold. These three parts are executed during an adjusting period.

Referring to figure 2 illustrating the first part 30 of the method, the receiving unit 1 and the control and processing unit 2 are in stand by 31 and are waiting for a measurement to be triggered. This triggering is done every triggering period. When a new triggering 32 is activated, the RF receiver verifies that the RSSI threshold adjusting is activated in order to take into account a measurement. If the RSSI threshold adjusting is activated, the wake up counter is incremented 34 by one. Otherwise, the wake up counter keeps unchanged.

Then the controller 21 orders a wake up 35 of the receiving unit 1 via the receiving unit wake up module 11. The RF detector 12 of receiving unit 1 proceeds to the reception 36 of the input signal and to the measurement 37 of its input power level. The RF receiver makes then the comparison 38 between the measured input power level and the RSSI threshold. This comparison is made in the comparator 13, the measured input power level and the RSSI threshold coming respectively from the RF detector 12 and the RSSI module 14.

If the input power level is greater than or equal to the RSSI threshold, the second part 40 of the method is done, corresponding to the reception and the determination of the coherence of the received signal. Otherwise, the wake up counter is compared 39 with the number of wake up requests corresponding to the adjusting period, in order to determine if the adjusting period is finished. If the wake up counter is equal to the number of wake up requests corresponding to the adjusting period, the third part 50 of the method is done, corresponding to the adjustment of the RSSI threshold. Otherwise, the actions are finished for this triggering period, and the RF receiver waits for a new measurement to be triggered at the next triggering period. In the present embodiment of the invention, the adjusting period is a multiple of the triggering period, for example 256.

Referring to figure 3 illustrating the second part 40 of the method, the RF receiver proceeds to the reception and the determination of the coherence of the received signal having found that the input power level is greater than or equal to the RSSI threshold. The control and processing unit 2 is waken up 41 and the receiving unit is put in a full receiving mode 42 in order to permit the RF receiver to receive the RF input signal and to read the data contained into this signal.

For the purpose of limiting the full data reception mode, the control unit only receives and reads 43 the preliminary binary signal. This preliminary binary signal allows to determine directly the coherence of the received signal without having to receive it entirely. The wake up preliminary signal contains a specific combination of "0" and "1" which is demodulated when received. The received preliminary binary signal is compared 44 with this wake up preliminary signal, and a wake up signal is only detected having found that the received preliminary binary signal perfectly matches with this specific wake up preliminary signal. This detected wake up preliminary signal also allows to determine if the received signal is coherent, because a coherent signal corresponds to a signal introducing a wake up, which means a signal including this specific wake up preliminary signal.

If the wake up preliminary signal is detected, the control and processing unit 2 receives 45 and reads the full signal having data. These data contain first a synchronization word and then the information data. This wake up is considered as a coherent wake up for transmitting a coherent signal having data into the appropriate format.

If the wake up preliminary signal is not detected, the full signal is not received and read and the false wake up counter is incremented 46 by one. This wake up is considered as a false wake up that does not allow the transmission of a coherent signal having data into the appropriate format.

Then the wake up counter is compared 47 with the number of wake up requests corresponding to the adjusting period. If the wake up counter is equal to the number of wake up requests corresponding to the adjusting period, the third part 50 of the method is done, corresponding to the adjustment of the RSSI threshold. Otherwise, the actions are finished for this triggering period, and the RF receiver waits for a new measurement to be triggered at the next triggering period.

Referring to figure 4 illustrating the third part 50 of the method, the wake up counter has reached the number of wake up requests corresponding to the adjusting period. Therefore the wake up counter is set 51 to zero. The number of false wake up requests that has appeared during this adjusting period corresponds to the false wake up counter. The false wake up counter is compared 52 with a preset low limit contained in the RSSI module. If the false wake up counter is lower than or equal to the low limit, the RSSI threshold is offset 53 by subtracting an unity. The false wake up counter is then compared 54 with a preset high limit contained in the RSSI module. If the false wake up counter is greater than or equal to the high limit, the RSSI threshold is offset 55 by adding two unities.

It is to be understood that the value of the low limit is lower than the value of the high limit. More particularly, the absolute value of said high offset is greater than the absolute value of said low offset. The RF receiver is able to be adapted quickly to new environmental conditions, by adapting quickly to high noise levels and coming back slowly to low noise levels.

After these two comparisons with low and high limits, the false wake up counter is set 56 to zero. Thus the wake up counter and the false wake up counter have been put to zero and the RF receiver is ready for a new adjusting period to begin.

For the purpose of minimizing the energy consumption, the receiving unit is put in stand by having received and measured the input signal.

Also for the purpose of minimizing the energy consumption, this method includes the following conditions:
- when the input power level is greater than or equal to the RSSI threshold, the control and processing unit is put in stand by having found that the input signal is a no coherent signal, and
- when the input power level is greater than or equal to the RSSI threshold, the control and processing unit is put in stand by having found that said input signal is a coherent signal and entirely received the input signal.

These two conditions are verified before the end of a triggering period, because as soon as the first, second or third part of the method is finished, the method comes back to its first part 30 when the receiving unit 1 and the control and processing unit 2 are put in stand by.

All this method - including first, second and third parts - is cyclically repeated according to the adjusting period. The RF receiver is therefore adapted to noise conditions each adjusting period. The duration of this adjusting period may be typically around one hour or less.

The method and the RF receiver according to above-mentioned embodiments allow to decrease the number of times a false wake up happens by about fifty. Such a decrease as a significant impact on the average consumption of the RF receiver, which may have a three times less consumption than without dynamically adjusting the RSSI threshold. The life duration of such an RF receiver is therefore multiplied by three. Moreover, this dynamic adjustment does not influence the accuracy of the RF receiver, because very few coherent signals are not fully received due to a not low enough RSSI threshold.

An RF receiver according to above-mentioned embodiments may have applications in automatic meter reading (AMR), environment or industry, where there is a need for an RF transceiver or receiver having a low consumption and an high life duration.

It is to be understood that the invention is not intended to be restricted to the details of the above embodiments, which are described only by way of example. Various modifications will become apparent to those skilled in the art and are within the scope of this invention, which is defined more particularly by the attached claims.

## Claims

1. A method for dynamically adjusting a received signal strength information (RSSI) module in a radio frequency (RF) receiver comprising a receiving unit (1) and a control and processing unit (2), said method comprising, during a preset adjusting period, the steps of:
- periodically receiving (36) an input signal having an input power level and measuring (37) said input power level, according to a triggering period,
- only waking up (41) said control and processing unit (2) for receiving (43) said input signal having found (38) that said input power level is greater than or equal to an adjustable RSSI threshold,
- detecting the number of false waking up which correspond to the times the receiver has been awakened with a no coherent signal.
- at the end (39,47) of said adjusting period, adjusting said RSSI threshold in such way that said RSSI threshold is increased (55) if the number of false waking ups is higher than a preset high limit, and is decreased (53) if said number is lower than a preset low limit.

2. The method of claim 1, wherein, at the end (39,47) of said adjusting period, said RSSI threshold is increased (55) by a preset high offset or decreased (53) by a preset low offset.

3. The method of claim 2, wherein the absolute value of said high offset is greater than the absolute value of said low offset.

4. The method of any of the preceding claims, wherein said input signal is entirely received only having found that said input signal is a coherent signal.

5. The method of any of the preceding claims, wherein said receiving unit (1) is put in stand by having received and measured said input signal.

6. The method of any of the preceding claims, wherein said receiving unit (1) is put in stand by having received and measured said input signal.

7. The method of any of the preceding claims, wherein, when said input power level is greater than or equal to said RSSI, threshold, said control and processing unit (2) is put in stand by having found that said input signal is a no coherent signal.

8. The method of any of the preceding claims, wherein, when said input power level is greater than or equal to the RSSI threshold, said control and processing unit (2) is put in stand by having found that said input signal is a coherent signal and entirely received said input signal.

9. The method of any of the preceding claims, wherein said adjusting period is a multiple of said triggering period.

10. The method of any of the preceding claims, cyclically repeated according to said adjusting period.

11. A RF receiver for dynamically adjusting a received signal strength information (RSSI) module, said RF receiver comprising a receiving unit (1) and a control and processing unit (2), said receiving unit (1) comprising:
- a RSSI module (14) comprising the value of an adjustable RSSI threshold,
- an RF detector (12) adapted to periodically receive an input signal having an input power level and measuring said input power level, according to a triggering period,
- an input signal/RSSI threshold comparator (13), adapted to compare the said input power level with said RSSI threshold,
- a control and processing unit wake up module (15), adapted to only wake up the said control and processing unit (2) for receiving said input signal having found that said input power level is greater than or equal to said RSSI threshold, said control and processing unit (2) detecting, in a preset adjusting period, the number of false waking up which correspond to the times the receiver has been awakened with a no coherent signal and adjusting said RSSI threshold in such way that said RSSI threshold is increased if higher than a preset high limit, and is decreased if lower than a preset low limit.

12. The RF receiver of claim 11, comprising a parameters manually adjusting module (23) for manually adjusting said RSSI threshold, high and low limits.

13. The RF receiver of any of the claims 11 and 12, comprising a dynamically RSSI threshold adjusting enable/disable module (24).

14. The RF receiver of any of the claims 11 to 13, wherein said control and processing unit (2) comprises at least one among a microprocessor and a microcontroller.

## Patentansprüche

1. Verfahren zur dynamischen Anpassung eines Empfangssignalstärkenanzeigemoduls (RSSI-Moduls) in einem HF-Empfänger, aufweisend eine Empfangseinheit (1) und eine Steuer- und Verarbeitungseinheit (2), wobei das Verfahren während einer im Voraus festgelegten Anpassungsperiode folgende Schritte aufweist:
- periodisches Empfangen (36) eines einen Eingangsleistungspegel aufweisenden Eingangssignals und Messen (37) des Eingangsleistungspegels in Übereinstimmung mit einem Triggerungsverfahren,
- nur Aufwecken (41) der Steuer- und Verarbeitungseinheit (2) für Empfangen (43) des Eingangssignals nach Feststellen (38), dass der Eingangsleistungspegel höher als oder gleich hoch wie ein anpassbarer RSSI-Schwellenwert ist,
- Erkennen der Anzahl falscher Weckvorgänge, die der Anzahl von Malen entspricht, an denen der Empfänger ohne ein kohärentes Signal aufgeweckt worden ist,
- am Ende (39, 47) der Anpassungsperiode Anpassen des RSSI-Schwellenwertes derart, dass der RSSI-Schwellenwert erhöht (55) wird, wenn die Anzahl falscher Weckvorgänge höher ist als ein im Voraus festgelegter hoher Grenzwert, und verringert (53) wird, wenn die Anzahl niedriger ist als ein im Voraus festgelegter Grenzwert.

2. Verfahren nach Anspruch 1, wobei am Ende (39, 47) der Anpassungsperiode der RSSI-Schwellenwert um einen im Voraus festgelegten hohen Offset-Wert erhöht (55) oder um einen im Voraus festgelegten niedrigen Offset-Wert gesenkt (53) wird.

3. Verfahren nach Anspruch 2, wobei der Absolut-Wert des hohen Offset-Werts höher ist als der Absolut-Wert des niedrigen Offset-Werts.

4. Verfahren nach einem der vorhergehenden Ansprüche, wobei das Eingangssignal nur vollständig nach Feststellen, dass das Eingangssignal ein kohärentes Signal ist, empfangen wird.

5. Verfahren nach einem der vorhergehenden Ansprüche, wobei die Empfangseinheit (1) nach Empfangen und Messen des Eingangssignals in Bereitschaft versetzt wird.

6. Verfahren nach einem der vorhergehenden Ansprüche, wobei die Empfangseinheit (1) nach Empfangen und Messen des Eingangssignals in Bereitschaft versetzt wird.

7. Verfahren nach einem der vorhergehenden Ansprüche, wobei, wenn der Eingangsleistungspegel höher als oder gleich hoch wie der RSSI-Schwellenwert ist, die Steuer- und Verarbeitungseinheit (2) nach Feststellen, dass das Eingangssignal kein kohärentes Signal ist, in Bereitschaft versetzt wird.

8. Verfahren nach einem der vorhergehenden Ansprüche, wobei, wenn der Eingangsleistungspegel höher als oder gleich hoch wie der RSSI-Schwellenwert ist, die Steuer- und Verarbeitungseinheit (2) nach Feststellen, dass das Eingangssignal ein kohärentes Signal und vollständig empfangenes Eingangssignal ist, in Bereitschaft versetzt wird.

9. Verfahren nach einem der vorhergehenden Ansprüche, wobei die Anpassungsperiode ein Vielfaches der Triggerungsperiode ist.

10. Verfahren nach einem der vorhergehenden Ansprüche, das in Übereinstimmung mit der Anpassungsperiode zyklisch wiederholt wird.

11. HF-Empfänger zur dynamischen Anpassung eines Empfangssignalstärkenanzeigemoduls (RSSI-Moduls), wobei der HF-Empfänger eine Empfangseinheit (1) und eine Steuer- und Verarbeitungseinheit (2) aufweist, wobei die Empfangseinheit (1) Folgendes aufweist:
- ein RSSI-Modul (14), aufweisend den Wert eines anpassbaren RSSI-Schwellenwerts,
- einen HF-Detektor (12), ausgelegt für periodisches Empfangen eines einen Eingangsleistungspegel aufweisenden Eingangssignals und Messen des Eingangsleistungspegels in Übereinstimmung mit einer Triggerungsperiode,
- einen Eingangssignal-/RSSI-Schwellenwert-Komparator (13), der ausgelegt ist für Vergleichen des Eingangsleistungspegels mit dem RSSI-Schwellenwert,
- ein Steuer- und Verarbeitungseinheits-Aufweckmodul (15), ausgelegt für nur Aufwecken der Steuer- und Verarbeitungseinheit (2) für Empfangen des Eingangssignals nach Feststellen, dass der Eingangsleistungspegel höher ist als oder gleich hoch ist wie der RSSI-Schwellenwert, wobei die Steuer- und Verarbeitungseinheit (2) in einer im Voraus festgelegten Anpassungsperiode die Anzahl falscher Weckvorgänge erkennt, die der Anzahl Male entspricht, die der Empfänger ohne ein kohärentes Signal aufgeweckt worden ist, und den RSSI-Schwellenwert derart anpasst, dass der RSSI-Schwellenwert erhöht wird, wenn er höher ist als ein im Voraus festgelegter hoher Grenzwert, und gesenkt wird, wenn er niedriger ist als ein im Voraus festgelegter niedriger Grenzwert.

12. HF-Empfänger nach Anspruch 11, ausweisend ein Parameter manuell anpassendes Modul (23) für manuelles Anpassen der hohen und niedrigen Grenzwerte des RSSI-Schwellenwerts.

13. HF-Empfänger nach einem der Ansprüche 11 und 12, aufweisend ein Aktivierungs-/Deaktivierungsmodul (24) für dynamisches Anpassen des RSSI-Schwellenwerts.

14. HF-Empfänger nach einem der Ansprüche 11 bis 13, wobei die Steuer- und Verarbeitungseinheit (2) einen Mikroprozessor und/oder Mikrocontroller aufweist.

## Revendications

1. Procédé de réglage dynamique d'un module d'information d'intensité de signal reçue (RSSI, Received Signal Strength Information) dans un récepteur radiofréquence (RF) comprenant une unité de réception (1) et une unité de commande et de traitement (2), ledit procédé comprenant, pendant une période de réglage prédéfinie, les étapes consistant à :
- recevoir périodiquement (36) un signal d'entrée ayant un niveau de puissance d'entrée et mesurer (37) ledit niveau de puissance d'entrée, conformément à une période de déclenchement,
- n'éveiller (41) ladite unité de commande et de traitement (2) pour recevoir (43) ledit signal d'entrée qu'après avoir trouvé (38) que ledit niveau de puissance d'entrée était supérieur ou égal à un seuil RSSI réglable,
- détecter le nombre de faux éveils qui correspondent aux fois où le récepteur a été éveillé par un signal non cohérent,
- à la fin (39, 47) de ladite période de réglage, régler ledit seuil RSSI de manière à ce que ledit seuil RSSI soit augmenté (55) si le nombre de faux éveils est supérieur à une limite haute prédéfinie, et soit réduit (53) si ledit nombre est inférieur à une limite basse prédéfinie.

2. Procédé selon la revendication 1, dans lequel, à la fin (39, 47) de ladite période de réglage, ledit seuil RSSI est augmenté (55) d'un décalage haut prédéfini ou est réduit (53) d'un décalage bas prédéfini.

3. Procédé selon la revendication 2, dans lequel la valeur absolue dudit décalage haut est supérieure à la valeur absolue dudit décalage bas.

4. Procédé selon l'une quelconque des revendications précédentes, dans lequel ledit signal d'entrée n'est entièrement reçu qu'après qu'il a été trouvé que ledit signal d'entrée était un signal cohérent.

5. Procédé selon l'une quelconque des revendications précédentes, dans lequel ladite unité de réception (1) est mise en attente lorsqu'elle a reçu et mesuré ledit signal d'entrée.

6. Procédé selon l'une quelconque des revendications précédentes, dans lequel ladite unité de réception (1) est mise en attente lorsqu'elle a reçu et mesuré ledit signal d'entrée.

7. Procédé selon l'une quelconque des revendications précédentes, dans lequel, lorsque ledit niveau de puissance d'entrée est supérieur ou égal audit seuil RSSI, ladite unité de commande et de traitement (2) est mise en attente lorsqu'il a été trouvé que ledit signal d'entrée était un signal non cohérent.

8. Procédé selon l'une quelconque des revendications précédentes, dans lequel, lorsque ledit niveau de puissance d'entrée est supérieur ou égal au seuil RSSI, ladite unité de commande et de traitement (2) est mise en attente lorsqu'il a été trouvé que ledit signal d'entrée était un signal cohérent et que ledit signal d'entrée a été entièrement reçu.

9. Procédé selon l'une quelconque des revendications précédentes, dans lequel ladite période de réglage est un multiple de ladite période de déclenchement.

10. Procédé selon l'une quelconque des revendications précédentes, qui est répété cycliquement conformément à ladite période de réglage.

11. Récepteur RF destiné à régler dynamiquement un module d'information d'intensité de signal reçu (RSSI), ledit récepteur RF comprenant une unité de réception (1) et une unité de commande et de traitement (2), ladite unité de réception (1) comprenant :
- un module RSSI (14) comprenant la valeur d'un seuil RSSI réglable,
- un détecteur RF (12) apte à recevoir périodiquement un signal d'entrée ayant un niveau de puissance d'entrée, et à mesurer ledit niveau de puissance d'entrée, conformément à une période de déclenchement,
- un comparateur de signal d'entrée/seuil RSSI (13), apte à comparer ledit niveau de puissance d'entrée audit seuil RSSI,
- un module (15) d'éveil d'unité de commande et de traitement, apte à n'éveiller ladite unité de commande et de traitement (2) que pour recevoir ledit signal d'entrée après qu'il a été trouvé que ledit niveau de puissance d'entrée était supérieur ou égal audit seuil RSSI, ladite unité de commande et de traitement (2) détectant, au cours d'une période de réglage prédéfinie, le nombre de faux éveils qui correspondent aux fois où le récepteur a été éveillé par un signal non cohérent, et réglant ledit seuil RSSI de manière à ce que ledit seuil RSSI soit augmenté s'il est supérieur à une limite haute prédéfinie, et soit réduit s'il est inférieur à une limite basse prédéfinie.

12. Récepteur RF selon la revendication 11, comprenant un module de réglage manuel de paramètres (23) destiné à régler manuellement ledit seuil RSSI, et lesdites limites haute et basse.

13. Récepteur RF selon l'une quelconque des revendications 11 et 12, comprenant un module d'activation/désactivation du réglage de seuil RSSI (24).

14. Récepteur RF selon l'une quelconque des revendications 11 à 13, dans laquelle ladite unité de commande et de traitement (2) comprend au moins l'un d'un microprocesseur et d'un microcontrôleur.
